# EUROPEAN PATENT APPLICATION

(11) **EP 2 336 089 A2**
(43) Date of publication of application: **22.06.2011**
(21) Application number: 10251034.4
(22) Date of filing: 04.06.2010
(51) Int. Cl.: C02F 1/02, C02F 1/48, C02F 1/00

(54) **Magnetic hygienical water tap**

(30) Priority: 10.11.2009 CN 200910193780
(71) Applicant: Kukel Technology Company Limited, Hong Kong (CN)
(72) Inventor: Zhong, Binglin, Guangzhou City Guangdong (CN)
(74) Representative: Martin, David John

(57) **Abstract**

The present invention discloses a magnetic water tap including a watercourse main body and a water flow switch. The watercourse main body includes a water tank, a water inlet, and a water outlet. The water inlet, water tank and water outlet are sequentially connected with each another by pipelines. The water flow switch is arranged between the water inlet and the water tank. A magnetic heating device is arranged in .the water tank. The magnetic heating device is connected to a control circuit. The magnetic water tap of the present invention can not only increase the water purifying rate, but also increase the solvency of water, and inhibit growth and breeding of bacillus, thereby dramatically improving the water quality.

## Description

### TECHNICAL FIELD

The present invention relates to a gate valve or a slide valve, and more particularly, to a magnetic hygienical water tap.

### BACKGROUND

Currently, a conventional magnetic water tap generally arranges a permanent magnet in water outlets of a water tap or in the water tap, and purifies the water by the means that the water instantaneously flows through the magnet when opening a water gate. For example there is a Chinese patent which the title is magnetization water tap (patent number is 93228245.8), the patent discloses a magnetization water tap including a valve body, a valve rod and a valve base. The valve base is disposed in the valve body. An end of the valve rod is displaced on the valve base, and the other end of the valve rod is provided with a handle which locates an outside portion of the valve base. A group of permanent magnets is symmetrically disposed in a water passage of the valve body. Although the conventional magnetic water tap can purify the water to a certain degree, however, the purifying rate is low.

There is, therefore, a need for a magnetic water tap, which improves the water quality.

### SUMMARY

Aiming at the above defects, the solved technical problems of the present patent application aim at providing a magnetic hygienical water tap which can not only improve the water purifying rate, but also increase the solvency of water, and inhibit growth and breeding of bacillus, thereby remarkably improving the water quality.

In order to solve the above technical problem, the present patent application provides the magnetic hygienical water tap, which comprising a watercourse main body and a water flow switch, wherein the watercourse main body comprises a water tank, a water inlet and a water outlet. The water inlet, the water tank and the water outlet are sequentially connected with each another by pipelines. A magnetic heating device coupled to a control circuit, is disposed in the water tank.

Preferably, the magnetic heating device is made from ceramic silicon nitride material, aluminium nitride material or titanium nitride material.

Preferably, the water flow switch is disposed between the water inlet and the water tank.

Preferably, the water flow switch is disposed between the water tank and the water outlet.

Preferably, the watercourse main body is provided with a water gate for controlling water flow.

Preferably, the watercourse main body is made of copper.

Preferably, the control circuit is provided with a leakage protection switch.

Preferably, the control circuit is provided with a temperature controller.

Compared with the prior arts, the magnetic water tap has a water tank. An inside of the water tank is provided with the magnetic heating device, and the magnetic heating device is coupled to the control circuit. The water inlet of the magnetic water tap is connected to a tap water pipe, and when the tap water enters into the water tank through the water flow switch, simultaneously, the water flow switch controls the control circuit which is coupled to the magnetic heating device to be electrified, and the magnetic heating device generate the magnetic field and are rapidly heated up, thereby to magnetize the tap water, purify the water, and improve liquidity of the water, solvency of the water, penetrability of the water, adsorbability of the water, and inhibit growth and breeding of bacillus, thereby dramatically improving the water quality.

Furthermore, the control circuit of the magnetic water tap is further provided with the leakage protection switch and the temperature controller, thereby solving the problems of electricity leakage and unstable water temperature when in use, and being capable of ensuring the security use of the water tap.

Other objects, advantages and novel features of the present invention will become more apparent from the following detailed description when taken in conjunction with the accompanying drawings, in which:

### BRIEF DESCRIPTION OF THE DRAWINGS

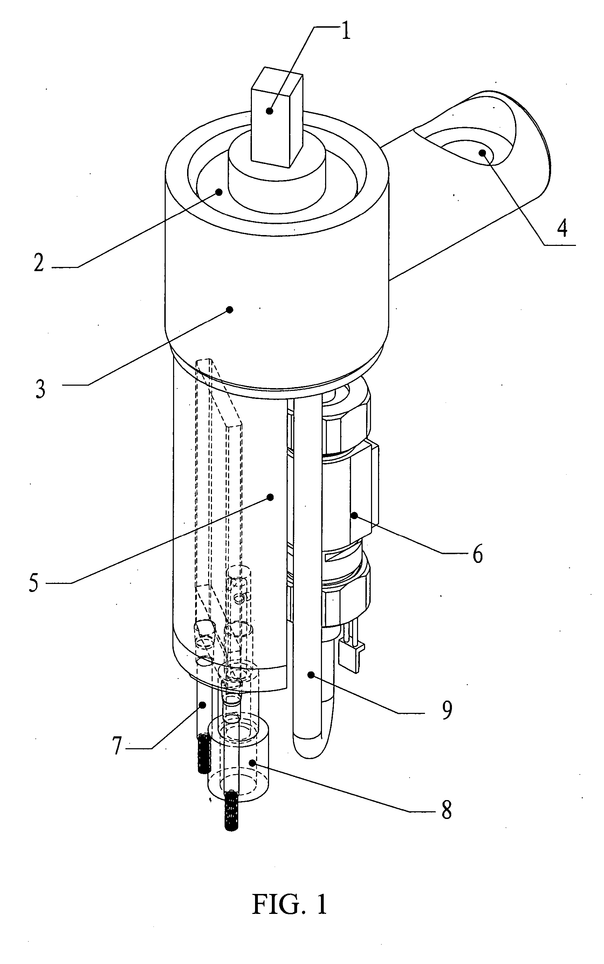

FIG. 1 is a structural and schematic view of the magnetic water tap in accordance with an embodiment of the present invention.

### DETAILED DESCRIPTION OF THE PREFERRED EMBODIMENTS

Objects, advantages and embodiments of the present invention will be explained below in detail with reference to the accompanying drawing. However, it is to be appreciated that the following description of the embodiment(s) is merely exemplary in nature and is no way intended to limit the invention, its application, or uses.

Referring to FIG. 1, a magnetic water tap is shown in accordance with an embodiment of the present invention. The magnetic water tap includes a watercourse main body 3 and a water flow switch 6. The watercourse main body 3 includes a water tank 5, a water inlet 2 and a water outlet 4. The water inlet 2, the water tank 5 and the water outlet 4 are sequentially connected with each another by a pipeline 9. A magnetic heating device 7 is arranged in the water tank 5, and the magnetic heating device 7 is coupled to a control circuit.

The magnetic heating device 7 may be made from ceramic silicon nitride material, aluminium nitride material or titanium nitride material. In the present embodiment, the magnetic heating device 7 is made from the ceramic silicon nitride material. The ceramic silicon nitride material, the aluminium nitride material and the titanium nitride material have good water and electricity isolation performance, thereby being capable of preventing metal pipes in the traditional water tap from self-oxidizing, aging, electricity leaking, etc.

The water flow switch 6 is arranged between the water inlet 2 and the water tank 5 so that the water flow can be controlled. A water gate is closely displaced in the water inlet 2 to be capable of adjusting the water flow.

The watercourse main body3 is made of copper, which is less affected by the change of the outer temperature and has low expansion and contraction coefficients and good heat resistance and weather resistance, thereby being capable of ensuring the stability of the watercourse main body 3.

The present patent application is in capsule design, isolates the water from the electricity, and has high security coefficient. The control circuit is further provided with a leakage protection switch and a temperature controller, thereby solving the problems of electric leakage and unstable water temperature when in use, and being capable of guaranteeing security of using tap.

Taking the magnetic heating device 7 made from ceramic silicon nitride as an example, the magnetic water tap has the working principle as follows:

The magnetic water tap is provided with a water tank inlet pipe 8 which is connected to a central position in the water tank 5. The diameter of the water tank inlet pipe 8 is less than that of the water inlet 2 of the water tap. After the water flows through the water flow switch 6, the magnetic heating device 7 are electrified to generate high temperature and magnetic field, and when the water flows through the magnetic field with high temperature and intensity, the magnetic heating device 7 can heat up the water, and the generated magnetic field can break water molecular chain. The magnetic water tap magnetizes the water by means of the micro magnetic field formed by the magnetic heating device 7 being electrified to work, therefore, the discharged water has magnetism to be capable of enhancing solvency, penetrability, adsorbability, and the like, and maintaining microelement and mineral substance required by human body, and the water quality changes to be soft, so that the human skin can change to be more smooth and tender if bathing with the softened and magnetized water for a long time, thereby achieving the effects of health protection, skin protection and skin beauty.

The present invention may be embodied in other forms without departing from the spirit or novel characteristics thereof. The embodiment disclosed in this application is to be considered in all respects as illustrative and not limitative. The scope of the invention is indicated by the appended claims rather than by the foregoing description; and all changes which come within the meaning and range of equivalency of the claims are intended to be embraced therein.

## Claims

1. A magnetic water tap, comprising:
a watercourse main body comprising a water tank, a water inlet and a water outlet; and
a water flow switch, wherein the water inlet; the water tank and the water outlet are sequentially connected with each another by pipelines, a magnetic heating device are arranged in the water tank, and the magnetic heating device is coupled to a control circuit.

2. The magnetic water tap as claimed in claim 1, wherein the magnetic heating device are made from ceramic silicon nitride material.

3. The magnetic water tap as claimed in claim 1, wherein the magnetic heating device are made from aluminium nitride material.

4. The magnetic water tap as claimed in claim 1, wherein the magnetic heating device are made from titanium nitride material.

5. The magnetic water tap as claimed in claim 1, wherein a water flow switch is disposed between the water inlet and the water tank.

6. The magnetic water tap as claimed in claim 1, wherein a water flow switch is disposed between the water tank and the water outlet.

7. The magnetic water tap as claimed in claim 1, wherein the water inlet is provided with a water gate for controlling water flow.

8. The magnetic water tap as claimed in claim 1, wherein the watercourse main body is made of copper.

9. The magnetic water tap as claimed in claim 1, wherein the control circuit is provided with a leakage protection switch.

10. The magnetic water tap as claimed in claim 1, wherein the control circuit is provided with a temperature controller.
